# EUROPÄISCHE PATENTANMELDUNG

(11) **EP 4 250 412 A1**
(43) Veröffentlichungstag der Anmeldung: **27.09.2023**
(21) Anmeldenummer: 22163517.0
(22) Anmeldetag: 22.03.2022
(51) Int. Cl.: H01M 10/04, H01M 50/107, H01M 50/533, H01M 50/536, H01M 50/545, H01M 50/548, H01M 50/559

(54) **ENERGIESPEICHERZELLE**

(71) Anmelder: VARTA Microbattery GmbH, 73479 Ellwangen Jagst (DE)
(72) Erfinder: Chumak, Ihor, 73479 Ellwangen (DE); Ensling, David, 73479 Ellwangen (DE); Kieninger, Dominik, 73492 Rainau (DE); Pytlik, Edward, 73479 Ellwangen (DE)
(74) Vertreter: Ostertag & Partner Patentanwälte mbB

(57) **Zusammenfassung**

Eine Energiespeicherzelle (100) umfasst einen Elektroden-Separator-Verbund (104) in Form eines zylindrischen Wickels mit zwei endständigen Stirnseiten (104a, 104b). Der Verbund (104) umfasst eine erste Elektrode (105) mit einem ersten bandförmigen Stromkollektor (106), welcher einen Längsrand (106a) aufweist, der aus der endständigen Stirnseite (104b) austritt. Eine von dem Verbund (104) umfasste zweite Elektrode (108) umfasst einen zweiten bandförmigen Stromkollektor (109), an den mindestens ein metallischer Ableiterstreifen (155) fixiert ist. Dieser tritt aus der Stirnseite (104a) aus. Der Verbund (104) wird von einem Gehäuse umschlossen, das einen metallischen Gehäusebecher (101) mit einem Boden (101a), einem hohlzylindrisch ausgebildeten Zentralabschnitt (101b) und einem Verschlussabschnitt (101c) sowie ein Deckelbauteil (102) umfasst. Der an den zweiten bandförmigen Stromkollektor (109) fixierte metallische Ableiterstreifen (155) ist durch Verschweißung mit dem Deckelbauteil (102) oder einem durch das Deckelbauteil (102) geführten Pol verbunden, während der erste Längsrand (106a) des ersten bandförmigen Stromkollektors (106) an den Boden (101a) und/oder an ein unmittelbar auf dem Boden (101a) aufsitzendes Metallblech geschweißt ist. Alternativ kann auch der an den zweiten Stromkollektor (109) fixierte mindestens eine metallische Ableiterstreifen (155) an den Gehäusebecher (101) geschweißt sein, während der erste Längsrand (106a) des ersten Stromkollektors (106) durch Verschweißung mit dem Deckelbauteil (102) oder einem durch das Deckelbauteil (102) führten Pol oder einem auf dem ersten Längsrand (106a) aufsitzenden Metallblech, das elektrisch an das Deckelbauteil (102) oder den Pol gekoppelt ist, verbunden ist.

## Beschreibung

Die nachstehend beschriebene Erfindung betrifft eine Energiespeicherzelle.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Elektroden-Separator-Verbund kombiniert, in dem die Elektroden über den Separator miteinander verbunden sind. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. In einem so gebildeten Wickel sind die Elektroden über den Separator miteinander verbunden, eine Verklebung oder eine ähnlich feste Verbindung der Elektroden mit dem Separator ist in den allermeisten Fällen nicht zweckmäßig. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 × 70 (Durchmesser mal Höhe in mm) Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Das Gehäuse zylindrischer Rundzellen umfasst in der Regel einen Gehäusebecher, der zur Aufnahme des gewickelten Elektroden-Separator-Verbunds dient, sowie ein Deckelbauteil, das die Öffnung des Gehäusebechers verschließt. Zwischen dem Deckelbauteil und dem Gehäusebecher ist eine Dichtung angeordnet, die zum einen der Abdichtung des Zellgehäuses dient, zum anderen aber auch die Funktion hat, das Deckelbauteil und den Gehäusebecher elektrisch voneinander zu isolieren. Die Dichtung wird zur Montage meist auf den Rand des Deckelbauteils aufgezogen. Zum Verschluss der Rundzellen ist in aller Regel der Öffnungsrand des Gehäusebechers radial nach innen über den von der Dichtung umschlossenen Rand des Deckelbauteils umgebogen (Bördelprozess), so dass das Deckelbauteil einschließlich der Dichtung in der Öffnung des Gehäusebechers formschlüssig fixiert ist.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene bandförmige Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weisen die Zellen Blechteile auf, die flach auf den Stirnseiten des Wickels aufsitzen und mit den Längsrändern der Stromkollektoren durch Verschweißung verbunden sind. Dadurch ist es möglich, die Stromkollektoren und damit auch die dazugehörige Elektroden über ihre gesamte Länge elektrisch zu kontaktieren. Zellen mit derart kontaktierten Wickeln weisen einen deutlich reduzierten Innenwiderstand auf. Das Auftreten großer Ströme kann in der Folge sehr viel besser abgefangen und auch Wärme kann besser aus dem Wickel abgeführt werden.

Im Falle einer solchen stirnseitigen Wickelkontaktierung werden bevorzugt sehr massive metallische Kontaktierungsblechteile eingesetzt, um hohe Querschnitte für hohe elektrische und thermische Leitfähigkeiten zu liefern. Der Einsatz solcher Kontaktierungsblechteile bringt natürlich aber auch Nachteile mit sich. So erhöht sich zwangsweise das Gewicht entsprechend ausgestatteter Zellen und regelmäßig sind zusätzliche Leiter erforderlich, um die Kontaktierungsblechteile weiter mit dem Gehäuse zu verbinden, was mit entsprechenden Volumenverlusten einhergeht.

### AUFGABE UND LÖSUNG

Der vorliegenden Erfindung lag die Aufgabe zugrunde, Energiespeicherzellen bereitzustellen, die sich durch eine hohe Energiedichte auszeichnen.

Diese Aufgabe wird durch die Energiespeicherzelle mit den Merkmalen des Anspruchs 1 gelöst. Bevorzugte Ausführungsformen der Erfindung finden sich in den abhängigen Ansprüchen 2 bis 5.

Die erfindungsgemäße Energiespeicherzelle weist die unmittelbar folgenden Merkmale a. bis j. auf:
a. Die Zelle umfasst einen Elektroden-Separator-Verbund mit der Sequenz erste Elektrode / Separator / zweite Elektrode.
b. Die erste Elektrode des Elektroden-Separator-Verbunds ist bandförmig ausgebildet und umfasst einen ersten bandförmigen Stromkollektor, der einen ersten Längsrand und einen dazu parallelen zweiten Längsrand aufweist.
c. Der erste bandförmige Stromkollektor umfasst einen Hauptbereich, der mit einer Schicht aus einem ersten Elektrodenmaterial beladen ist, sowie einen freien Randstreifen, der sich entlang seines ersten Längsrands erstreckt und der nicht mit dem ersten Elektrodenmaterial beladen ist.
d. Die zweite Elektrode des Elektroden-Separator-Verbunds ist bandförmig ausgebildet und umfasst einen zweiten bandförmigen Stromkollektor, der einen ersten Längsrand und einen dazu parallelen zweiten Längsrand aufweist.
e. Der zweite bandförmige Stromkollektor ist mit einer Schicht aus einem zweiten Elektrodenmaterial beladen und mindestens ein metallischer Ableiterstreifen ist an dem zweiten Stromkollektor fixiert.
f. Der Elektroden-Separator-Verbund liegt in Form eines zylindrischen Wickels mit einer ersten endständigen, von einer umlaufenden Kante begrenzten Stirnseite und einer zweiten endständigen, von einer umlaufenden Kante begrenzten Stirnseite und einem dazwischen liegenden Wickelmantel vor und umfasst die erste und die zweite Elektrode in spiralförmig aufgewickelter Form.
g. Die erste und die zweite Elektrode sind innerhalb des Elektroden-Separator-Verbunds derart angeordnet, dass der erste Längsrand des ersten Stromkollektors aus der zweiten endständigen Stirnseite austritt.
h. Der an den zweiten bandförmigen Stromkollektor fixierte mindestens eine metallische Ableiterstreifen tritt aus der ersten endständigen Stirnseite des Elektroden-Separator-Verbunds aus.
i. Die Zelle umfasst ein luft- und flüssigkeitsdicht verschlossenes Gehäuse, das einen metallischen Gehäusebecher mit einem Boden und einer endständigen kreisförmigen Öffnung sowie ein Deckelbauteil mit einem kreisförmigen Rand, welches die endständige kreisförmige Öffnung verschließt, aufweist.
j. In dem Gehäusebecher ist der Elektroden-Separator-Verbund in axialer Ausrichtung angeordnet.

Besonders zeichnet sich die erfindungsgemäße Energiespeicherzelle weiterhin durch eines der folgenden Merkmale k. oder l. aus:
k. Der an den zweiten Stromkollektor fixierte mindestens eine metallische Ableiterstreifen ist durch Verschweißung mit dem Deckelbauteil oder einem durch das Deckelbauteil geführten Pol verbunden, während der erste Längsrand des ersten Stromkollektors an den Boden oder an ein unmittelbar auf dem Boden aufsitzendes Metallblech geschweißt ist (Variante A),
   oder
l. der an den zweiten Stromkollektor fixierte mindestens eine metallische Ableiterstreifen ist an den Gehäusebecher geschweißt, während der erste Längsrand des ersten Stromkollektors durch Verschweißung mit dem Deckelbauteil oder einem durch das Deckelbauteil geführten Pol oder einem auf dem ersten Längsrand aufsitzenden Metallblech, das elektrisch an das Deckelbauteil oder den Pol gekoppelt ist, verbunden ist (Variante B).

Die erfindungsgemäße Zelle weist also einen asymmetrisch kontaktierten Wickel auf, der über einen Rand eines der Stromkollektoren an ein Gehäuseteil angebunden ist, während die Kontaktierung des anderen Stromkollektors an ein zweites Gehäuseteil über den mindestens einen Ableiterstreifen erfolgt.

Besonders bevorzugt weist die erste Stirnseite des in axialer Ausrichtung angeordneten Elektroden-Separator-Verbunds in Richtung des Deckelbauteils, während die zweite Stirnseite bevorzugt in Richtung des Bodens des flüssigkeitsdicht verschlossenen Gehäuses weist.

Die erste und die zweite Elektrode sind entgegengesetzt gepolt. Bevorzugt ist
- die erste Elektrode die negative Elektrode (Anode),
- die zweite Elektrode die positive Elektrode (Kathode),
- der erste bandförmige Stromkollektor der Anodenstromkollektor,
- das erste Elektrodenmaterial ein negatives Elektrodenmaterial,
- der zweite bandförmige Stromkollektor ist der Kathodenstromkollektor, und
- das zweite Elektrodenmaterial ein positives Elektrodenmaterial.

In einigen alternativen bevorzugten Ausführungsformen kann es allerdings auch bevorzugt sein, dass
- die erste Elektrode die positive Elektrode (Kathode),
- die zweite Elektrode die negative Elektrode (Anode),
- der erste bandförmige Stromkollektor der Kathodenstromkollektor,
- das erste Elektrodenmaterial ein positives Elektrodenmaterial,
- der zweite bandförmige Stromkollektor der Anodenstromkollektor, und
- das zweite Elektrodenmaterial ein negatives Elektrodenmaterial ist.

Für den Fall, dass der Gehäusebecher den positiven Pol der Zelle ausbilden soll, wird der Kathodenstromkollektor zum Becher kontaktiert und der Anodenstromkollektor zum Deckel bzw. der Poldurchführung. Für den Fall, dass der Gehäusebecher den negativen Pol der Zelle ausbilden soll, wird der Anodenstromkollektor zum Becher kontaktiert und der Kathodenstromkollektor zum Deckel bzw. der Poldurchführung.

An dem zweiten bandförmigen Stromkollektor, insbesondere dem Kathodenstromkollektor, können gegebenenfalls auch zwei oder mehr Ableiterstreifen fixiert sein.

Bevorzugt ist zweite bandförmige Stromkollektor, insbesondere der bandförmige Kathodenstromkollektor, mit der Schicht aus dem ersten Elektrodenmaterial, insbesondere dem positivem Elektrodenmaterial beladen, und weist mindestens einen freien Abschnitt auf, der nicht mit dem Elektrodenmaterial beladen ist und an den der metallische Ableiterstreifen angeschweißt ist. Gegebenenfalls sind an zwei oder mehr solcher Abschnitte metallische Ableiterstreifen angeschweißt.

In einigen Ausführungsformen ist der freie Abschnitt oder einer der freien Abschnitte ein endständiger Abschnitt des zweiten bandförmigen Stromkollektors, insbesondere des Kathodenstromkollektors, beispielsweise die äußerste Windung in dem zylindrischen Wickel. In diesem Fall tritt der an den freien Abschnitt angeschweißte metallische Ableiterstreifen unmittelbar an der umlaufenden Kante der ersten endständigen Stirnseite aus dieser aus.

In vielen bevorzugten Ausführungsformen ist der freie Abschnitt allerdings kein endständiger Abschnitt sondern ein mittiger, was bedeuten soll, dass sich an ihn, bezogen auf die Haupterstreckungsrichtung des zweiten Stromkollektors, auf beiden Seiten des Abschnitts mit Elektrodenmaterial beladene Stromkollektorabschnitte anschließen. In diesem Fall tritt der an den freien Abschnitt angeschweißte metallische Ableiterstreifen sowohl beabstandet vom Zentrum des Wickels als auch beabstandet von der umlaufenden Kante der ersten endständigen Stirnseite aus dieser aus.

Alternativ kann der mindestens eine metallische Ableiterstreifen auch an den beschichten Bereich des zweiten Stromkollektors fixiert werden, was in der Regel aber zu einem schlechteren Übergangswiderstand führt.

In besonders bevorzugten Ausführungsformen weist die erfindungsgemäße Energiespeicherzelle mindestens eines der drei unmittelbar folgenden Merkmale a. bis c. auf:
a. Die Zelle umfasst eine ringförmige Dichtung aus einem elektrisch isolierenden Material, die den kreisförmigen Rand des Deckelbauteils umschließt und den Gehäusebecher und das Deckelbauteil elektrisch voneinander isoliert.
b. Der Gehäusebecher umfasst eine Innenseite und eine Außenseite und in axialer Abfolge den Boden, einen Zentralabschnitt und einen Verschlussabschnitt, wobei
   - der Zentralabschnitt hohlzylindrisch ausgebildet ist und in dem Zentralabschnitt der Wickelmantel des als Wickel ausgebildeten Elektroden-Separator-Verbunds mit der Innenseite des Gehäusebechers in Kontakt steht, und
   - in dem Verschlussabschnitt die ringförmige Dichtung in einem Presskontakt mit dem Deckelbauteil und der Innenseite des Gehäusebechers steht.
c. Der Zentralabschnitt und der Verschlussabschnitt sind durch eine Einbuchtung, welche die Außenseite des Gehäusebechers ringförmig umläuft, getrennt.

Bevorzugt sind die Merkmale b. und c. in Kombination realisiert. Insbesondere das Merkmal a. kann unabhängig von den anderen Merkmalen realisiert sein. Besonders bevorzugt sind alle drei Merkmale a. bis c. in Kombination realisiert.

In dieser Ausführungsform sind der Gehäusebecher und das Deckelbauteil elektrisch voneinander getrennt und können daher beide als Pole der Energiespeicherzelle dienen. In Fällen ohne die ringförmige Dichtung aus dem elektrisch isolierenden Material kommt der erwähnte durch das Deckelbauteil geführten Pol zum Einsatz. Dieser muss dann gegenüber dem Deckelbauteil elektrisch isoliert sein.

In einer besonders bevorzugten Weiterbildung weist die erfindungsgemäße Energiespeicherzelle die unmittelbar folgenden Merkmale a. bis n. auf:
a. Die Zelle umfasst den Elektroden-Separator-Verbund mit der Sequenz Anode / Separator / Kathode.
b. Die Anode des Elektroden-Separator-Verbunds ist bandförmig ausgebildet und umfasst einen bandförmigen Anodenstromkollektor, der einen ersten Längsrand und einen dazu parallelen zweiten Längsrand aufweist.
c. Der bandförmige Anodenstromkollektor umfasst einen Hauptbereich, der mit einer Schicht aus negativem Elektrodenmaterial beladen ist, sowie einen freien Randstreifen, der sich entlang seines ersten Längsrands erstreckt und der nicht mit dem negativen Elektrodenmaterial beladen ist.
d. Die Kathode des Elektroden-Separator-Verbunds ist bandförmig ausgebildet und umfasst einen bandförmigen Kathodenstromkollektor, der einen ersten Längsrand und einen dazu parallelen zweiten Längsrand aufweist.
e. Der bandförmige Kathodenstromkollektor ist mit einer Schicht aus positivem Elektrodenmaterial beladen und mindestens ein metallischer Ableiterstreifen ist an dem Kathodenstromkollektor fixiert.
f. Der Elektroden-Separator-Verbund liegt in Form eines zylindrischen Wickels mit einer ersten endständigen, von einer umlaufenden Kante begrenzten Stirnseite und einer zweiten endständigen, von einer umlaufenden Kante begrenzten Stirnseite und einem dazwischen liegenden Wickelmantel vor und umfasst die Anode und die Kathode in spiralförmig aufgewickelter Form.
g. Die Anode und die Kathode sind innerhalb des Elektroden-Separator-Verbunds derart angeordnet, dass der erste Längsrand des Anodenstromkollektors aus der zweiten endständigen Stirnseite austritt.
h. Der an den Kathodenstromkollektor angeschweißte metallische Ableiterstreifen tritt aus der ersten endständigen Stirnseite des Elektroden-Separator-Verbunds aus.
i. Die Zelle umfasst ein luft- und flüssigkeitsdicht verschlossenes Gehäuse, das einen metallischen Gehäusebecher mit einem Boden und einer endständigen kreisförmigen Öffnung sowie ein Deckelbauteil mit einem kreisförmigen Rand, welche die endständige kreisförmige Öffnung verschließt, aufweist.
j. In dem Gehäusebecher ist der Elektroden-Separator-Verbund in axialer Ausrichtung angeordnet, wobei die erste Stirnseite in Richtung des Deckelbauteils weist.
k. Die Zelle umfasst eine ringförmige Dichtung aus einem elektrisch isolierenden Material, die den kreisförmigen Rand des Deckelbauteils umschließt und den Gehäusebecher und das Deckelbauteil elektrisch voneinander isoliert.
l. Der Gehäusebecher umfasst eine Innenseite und eine Außenseite und in axialer Abfolge den Boden, einen Zentralabschnitt und einen Verschlussabschnitt, wobei
   - der Zentralabschnitt hohlzylindrisch ausgebildet ist und in dem Zentralabschnitt der Wickelmantel des als Wickel ausgebildeten Elektroden-Separator-Verbunds mit der Innenseite des Gehäusebechers in Kontakt steht, und
   - in dem Verschlussabschnitt die ringförmige Dichtung in einem Presskontakt mit dem Deckelbauteil und der Innenseite des Gehäusebechers steht.
m. Der Zentralabschnitt und der Verschlussabschnitt sind durch eine Einbuchtung, welche die Außenseite des Gehäusebechers ringförmig umläuft, getrennt.
n. Der an den Kathodenstromkollektor fixierte metallische Ableiterstreifen ist durch Verschweißung mit dem Deckelbauteil verbunden, während der erste Längsrand des Anodenstromkollektors an den Boden oder an ein unmittelbar auf dem Boden aufsitzendes Metallblech geschweißt ist.

Der Einsatz des Ableiterstreifens auf der zum Deckel zugewandten Seite des Wickels bei gleichzeitiger Anbindung der Anode über den im Idealfall gesamten Längsrand ihres Stromkollektors bietet volumetrische Vorteile, die insbesondere bei energieoptimierten Zellen zum Tragen kommen. Gleichzeitig resultieren positive Effekte aus der hervorragenden Anbindung der Anode und damit eine verbesserte Leistung und Lebensdauer der erfindungsgemäßen Zelle. Insbesondere für eine verbesserte Schnellladefähigkeit ist möglichst homogene elektrische und thermische Anbindung der Anode von Vorteil. Gezielt zu erwähnen ist in diesem Zusammenhang ein vermindertes Auftreten von Lithium-Plating beim Schnellladen (>2C) oder beim Laden bei tiefen Temperaturen (<0°C).

In einer weiteren besonders bevorzugten Weiterbildung weist die erfindungsgemäße Energiespeicherzelle entsprechend die unmittelbar folgenden Merkmale a. bis n. auf:
a. Die Zelle umfasst den Elektroden-Separator-Verbund mit der Sequenz Anode / Separator / Kathode.
b. Die Kathode des Elektroden-Separator-Verbunds ist bandförmig ausgebildet und umfasst einen bandförmigen Kathodenstromkollektor, der einen ersten Längsrand und einen dazu parallelen zweiten Längsrand aufweist.
c. Der bandförmige Kathodenstromkollektor umfasst einen Hauptbereich, der mit einer Schicht aus positivem Elektrodenmaterial beladen ist, sowie einen freien Randstreifen, der sich entlang seines ersten Längsrands erstreckt und der nicht mit dem positiven Elektrodenmaterial beladen ist.
d. Die Anode des Elektroden-Separator-Verbunds ist bandförmig ausgebildet und umfasst einen bandförmigen Anodenstromkollektor, der einen ersten Längsrand und einen dazu parallelen zweiten Längsrand aufweist.
e. Der bandförmige Anodenstromkollektor ist mit einer Schicht aus negativem Elektrodenmaterial beladen und mindestens ein metallischer Ableiterstreifen ist an dem Anodenstromkollektor fixiert.
f. Der Elektroden-Separator-Verbund liegt in Form eines zylindrischen Wickels mit einer ersten endständigen, von einer umlaufenden Kante begrenzten Stirnseite und einer zweiten endständigen, von einer umlaufenden Kante begrenzten Stirnseite und einem dazwischen liegenden Wickelmantel vor und umfasst die Anode und die Kathode in spiralförmig aufgewickelter Form.
g. Die Anode und die Kathode sind innerhalb des Elektroden-Separator-Verbunds derart angeordnet, dass der erste Längsrand des Kathodenstromkollektors aus der zweiten endständigen Stirnseite austritt.
h. Der an den Anodenstromkollektor angeschweißte metallische Ableiterstreifen tritt aus der ersten endständigen Stirnseite des Elektroden-Separator-Verbunds aus.
i. Die Zelle umfasst ein luft- und flüssigkeitsdicht verschlossenes Gehäuse, das einen metallischen Gehäusebecher mit einem Boden und einer endständigen kreisförmigen Öffnung sowie ein Deckelbauteil mit einem kreisförmigen Rand, welche die endständige kreisförmige Öffnung verschließt, aufweist.
j. In dem Gehäusebecher ist der Elektroden-Separator-Verbund in axialer Ausrichtung angeordnet, wobei die erste Stirnseite in Richtung des Deckelbauteils weist.
k. Die Zelle umfasst eine ringförmige Dichtung aus einem elektrisch isolierenden Material, die den kreisförmigen Rand des Deckelbauteils umschließt und den Gehäusebecher und das Deckelbauteil elektrisch voneinander isoliert.
l. Der Gehäusebecher umfasst eine Innenseite und eine Außenseite und in axialer Abfolge den Boden, einen Zentralabschnitt und einen Verschlussabschnitt, wobei
   - der Zentralabschnitt hohlzylindrisch ausgebildet ist und in dem Zentralabschnitt der Wickelmantel des als Wickel ausgebildeten Elektroden-Separator-Verbunds mit der Innenseite des Gehäusebechers in Kontakt steht, und
   - in dem Verschlussabschnitt die ringförmige Dichtung in einem Presskontakt mit dem Deckelbauteil und der Innenseite des Gehäusebechers steht.
m. Der Zentralabschnitt und der Verschlussabschnitt sind durch eine Einbuchtung, welche die Außenseite des Gehäusebechers ringförmig umläuft, getrennt.
n. Der an den Anodenstromkollektor fixierte metallische Ableiterstreifen ist durch Verschweißung mit dem Deckelbauteil verbunden, während der erste Längsrand des Kathodenstromkollektors an den Boden oder an ein unmittelbar auf dem Boden aufsitzendes Metallblech geschweißt ist.

Auch der Einsatz des Ableiterstreifens auf der zum Deckel zugewandten Seite des Wickels bei gleichzeitiger Anbindung der Kathode über den im Idealfall gesamten Längsrand ihres Stromkollektors bietet volumetrische Vorteile, die insbesondere bei energieoptimierten Zellen zum Tragen kommen. Gleichzeitig resultieren auch hier positive Effekte aus der hervorragenden Anbindung der Kathode und damit eine verbesserte Leistung und Lebensdauer der erfindungsgemäßen Zelle.

Der Elektroden-Separator-Verbund ist bevorzugt unter Verwendung zweier bandförmiger Separatoren gefertigt. Bevorzugt weist der Verbund die Sequenz Separator / Anode / Separator / Kathode oder Anode / Separator / Kathode / Separator auf. Der oder die Separatoren umschließen dann also entweder die Anode oder die Kathode. Ihnen kommt die Aufgabe zu, einen unmittelbaren elektrischen Kontakt zwischen entgegengesetzt gepolten Elektroden innerhalb des Wickels zu vermeiden und gleichzeitig einen Austausch von Ionen zwischen den Elektroden zuzulassen.

Der Boden des Gehäusebechers ist bevorzugt kreisförmig ausgebildet. Der Gehäusebecher wird meist durch Tiefziehen gebildet. Es ist aber beispielsweise auch möglich, den Becher durch Einschweißen eines Bodens in ein rohrförmiges Halbteil zu bilden. Im Rahmen der vorliegenden Erfindung ist es auch möglich, ein Blechteil mit kreisförmigen Umfang durch Verschweißung mit dem ersten Längsrand des ersten, aus der zweiten endständigen Stirnseite austretenden Stromkollektors zu verbinden, idealerweise derart, dass der Längsrand über seine gesamte Länge mit dem Blechteil verbunden ist, und mit dem Blechteil in einem Folgeschritt ein Ende des rohrförmigen Halbteils zu verschließen, so dass das Blechteil den Boden des Gehäusebechers bildet.

Bevorzugt weist der Gehäusebecher eine Wandstärke im Bereich von 0,1 mm bis 2 mm auf.

Der Gehäusebecher besteht beispielsweise aus einem Stahlblech, in bevorzugten Ausführungsformen einem vernickelten Stahlblech. Alternativ kann Edelstahl eingesetzt werden oder bei umgekehrter Polarität Aluminium, auch in Form einer Legierung.

Bei der erfindungsgemäßen Energiespeicherzelle handelt es sich bevorzugt um eine zylindrische Rundzelle. Bevorzugt liegt die Höhe einer als zylindrische Rundzelle ausgebildeten der erfindungsgemäßen Energiespeicherzelle im Bereich von 50 mm bis 150 mm. Ihr Durchmesser liegt bevorzugt im Bereich von 15 mm bis 60 mm. Zylindrische Rundzellen mit diesen Formfaktoren eignen sich beispielsweise zur Stromversorgung elektrischer Antriebe von Kraftfahrzeugen.

In einer besonders bevorzugten Ausführungsform der Erfindung ist die erfindungsgemäße Energiespeicherzelle eine Lithium-Ionen-Zelle.

Für die Elektroden der Energiespeicherzelle können im Grunde sämtliche für sekundäre Lithium-lonen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischem Lithium.

Für die positiven Elektroden kommen als Aktivmaterialien beispielsweise Lithium-MetalloxidVerbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden einer erfindungsgemäßen Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, StyrolButadien-Kautschuk oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Die erfindungsgemäße Energiespeicherzelle umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithium-bis(fluorosulfonyl)imid (LiFSI) und Lithiumbis(oxalato)borat (LiBOB).

Die Nennkapazität einer als zylindrische Rundzelle ausgebildeten erfindungsgemäßen Energiespeicherzelle auf Lithium-Ionen-Basis beträgt bevorzugt bis zu 15000 mAh. Mit dem Formfaktor von 21 × 70 hat die Energiespeicherzelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Wie oben ausgeführt, weist der in Form eines zylindrischen Wickels vorliegende Elektroden-Separator-Verbund zwei endständige, jeweils von einer umlaufenden Kante begrenzte Stirnseiten auf. Radial wird er durch den erwähnten Wickelmantel begrenzt. Dieser ist bevorzugt elektrisch isolierend ausgebildet und kann beispielsweise aus mehreren Lagen des Separators oder der Separatoren gebildet sein, oder aus einer separaten Kunststofffolie, insbesondere einer separaten Kunststoffklebefolie.

Damit der metallische Ableiterstreifen innerhalb des Gehäuses nicht zu viel Platz in Anspruch nimmt, sollte er möglichst plan auf der ersten Stirnseite aufliegen.

In einer besonders bevorzugten Ausführungsform zeichnet sich die erfindungsgemäße Energiespeicherzelle durch mindestens eines der unmittelbar folgenden Merkmale a. und b. aus:
a. Der an den zweiten bandförmigen Stromkollektor fixierte, bevorzugt angeschweißte metallische Ableiterstreifen tritt aus der ersten Stirnseite aus und ist um einen Winkel von näherungsweise 90° umgebogen, so dass er zumindest abschnittweise im Wesentlichen flach auf der ersten Stirnseite aufliegt.
b. Zwischen dem umgebogenen Ableiterstreifen und der Stirnseite ist eine Kunststofffolie oder eine Kunststoffscheibe angeordnet, die die Stirnseite vor einem unmittelbaren Kontakt mit dem Ableiterstreifen schützt.

Solche Isolationsmaßnahmen sind zweckmäßig, um die Gefahr eines Kurzschlusses an der ersten Stirnseite, bedingt durch den umgebogenen metallischen Ableiterstreifen, zu verringern.

Weitere zusätzliche oder alternative Vorkehrungen können zweckmäßig sein. So zeichnet sich die erfindungsgemäße Energiespeicherzelle bevorzugt weiterhin durch mindestens eines der unmittelbar folgenden Merkmale a. und b. aus:
a. Die erste Stirnseite wird von einem Längsrand des Separators sowie gegebenenfalls einem weiteren Längsrand eines weiteren Separators gebildet.
b. Der Längsrand des Separators, der die Stirnseite bildet, ist keramisch verstärkt.

Um einen direkten Kontakt entgegengesetzt gepolter Elektroden an den axialen Enden eines Wickels zu verhindern, verwendet man bevorzugt Separatoren, die etwas breiter sind als die zu separierenden Elektrodenbänder. Wickel der hier beschriebenen Art schließen daher an ihren axialen Enden bevorzugt jeweils mit einem Separatorüberstand ab, der entsprechend die Stirnseiten bildet.

Um den Wickel stirnseitig vor einem Kontakt mit dem umgebogenen metallischen Ableiterstreifen zu schützen, kann es zweckmäßig sein, den oder die Separatoren, wie erwähnt, keramisch zu verstärken.

In einer bevorzugten Weiterbildung zeichnet sich die erfindungsgemäße Zelle durch das unmittelbar folgende Merkmal a. aus:
a. Die keramische Verstärkung wird durch mindestens ein partikuläres keramisches Füllmaterial in dem oder den Separatoren bewirkt.

Bei dem Separator kann es sich also bevorzugt um eine elektrisch isolierende Kunststofffolie handeln, in die das partikuläre Füllmaterial eingelagert ist. Es ist bevorzugt, dass die Kunststofffolie von dem Elektrolyten durchdrungen werden kann, beispielsweise weil sie Mikroporen aufweist. Die Folie kann beispielsweise aus einem Polyolefin oder aus einem Polyetherketon gebildet sein. Nicht ausgeschlossen ist, dass auch Vliese und Gewebe aus solchen Kunststoffmaterialien zum Einsatz kommen können. Auch diese können in Einzelfällen bevorzugt sein.

Der Anteil an dem partikulären Füllmaterial in dem Separator beträgt bevorzugt mindestens 40 Gew.-%, besonders bevorzugt mindestens 60 Gew.-%.

In einer weiteren bevorzugten Weiterbildung zeichnet sich die erfindungsgemäße Zelle durch das unmittelbar folgende Merkmal a. aus:
a. Die keramische Verstärkung wird durch mindestens ein partikuläres keramisches Material bewirkt, das als Beschichtung auf einer Oberfläche des oder der Separatoren vorliegt.

Bei dem Separator kann es sich also bevorzugt auch um eine Kunststofffolie oder ein Vlies oder ein Gewebe oder ein sonstiges elektrisch isolierendes Flächengebilde handeln, die oder das mit dem keramischen Füllmaterial beschichtet ist.

Beispielsweise werden bevorzugt Separatoren eingesetzt, die eine Basisdicke im Bereich von 5 µm bis 20 µm, bevorzugt im Bereich von 7 µm bis 12 µm, aufweisen. Die Gesamtdicke der Separatoren ergibt sich aus der Basisdicke und der Dicke der Beschichtung.

In einigen Ausführungsformen ist nur eine Seite des Flächengebildes, insbesondere der Kunststofffolie, mit dem keramischen Material beschichtet. In weiteren Ausführungsformen ist das Flächengebilde, insbesondere die Kunststofffolie, bevorzugt beidseitig mit dem keramischen Material beschichtet.

Gegebenenfalls kann es auch bevorzugt sein, dass die verwendeten Separatoren ein keramisches Material als Füllmaterial und das gleiche oder ein anderes keramisches Material als Beschichtung umfassen.

In weiteren möglichen bevorzugten Weiterbildungen zeichnet sich die erfindungsgemäße Zelle durch mindestens eines der unmittelbar folgenden Merkmale a. bis e. aus:
a. Das mindestens eine keramische Material / Füllmaterial ist oder umfasst ein elektrisch isolierendes Material.
b. Das mindestens eine keramische Material / Füllmaterial ist oder umfasst mindestens ein Material aus der Gruppe mit glaskeramischem Material und Glas.
c. Das mindestens eine keramische Material / Füllmaterial ist oder umfasst ein Lithiumionen leitendes keramisches Material, beispielsweise Li₅AlO₄*Li₄SiO₄ oder LiAlSi₂O₆.
d. Das mindestens eine keramische Material / Füllmaterial ist oder umfasst ein oxidisches Material, insbesondere ein Metalloxid.
e. Bei dem keramischen oder dem oxidischen Material handelt es sich um Aluminiumoxid (Al₂O₃), um Titanoxid (TiO₂), um Titannitrid (TiN), um Titanaluminiumnitrid (TiAIN), um ein Siliziumoxid, insbesondere Siliziumdioxid (SiO₂) oder um Titancarbonitrid (TiCN).

Es ist besonders bevorzugt, dass die unmittelbar vorstehenden Merkmale a. bis c. oder die unmittelbar vorstehenden Merkmale a. und b. und d. oder die unmittelbar vorstehenden Merkmale a. und b. und e. in Kombination miteinander verwirklicht sind.

Unter den genannten Materialien sind als Beschichtungsmaterialien Aluminiumoxid (Al₂O₃), Titanoxid (TiO₂) und Siliziumdioxid (SiO₂) besonders bevorzugt.

In weiteren möglichen bevorzugten Weiterbildungen zeichnet sich die erfindungsgemäße Zelle durch mindestens eines der unmittelbar folgenden Merkmale a. und b. aus:
a. Der Separator oder die Separatoren umfassen das mindestens eine keramische Material lediglich bereichsweise.
b. Der Separator oder die Separatoren weisen entlang des die erste Stirnseite bildenden Längsrands einen Randstreifen auf, in dem sie das mindestens eine keramische Material als Beschichtung und/oder als partikuläres Füllmaterial umfassen.

Es ist besonders bevorzugt, dass die unmittelbar vorstehenden Merkmale a. und b. in Kombination miteinander verwirklicht sind.

Es ist keinesfalls zwingend erforderlich, dass der Separator das keramische Material in homogener Verteilung umfasst oder gleichmäßig und überall mit dem Material beschichtet ist. Vielmehr kann es sogar bevorzugt sein, dass der Separator in bestimmten Bereichen, beispielsweise in dem erwähnten Hauptbereich, frei von dem keramischen Material ist. In diesem Bereich wird eine erhöhte thermische Beständigkeit des Separators nicht so sehr benötigt wie an den Rändern des Separators. Darüber hinaus kann das keramische Material insbesondere in diesem Bereich zu einer ungewollten Erhöhung des Innenwiderstands der erfindungsgemäßen Zelle beitragen.

Es ist bevorzugt, dass sich die erfindungsgemäße Zelle durch mindestens eines der folgenden Merkmale a. bis c. auszeichnet:
a. Der Gehäusebecher weist in dem Zentralabschnitt und dem Verschlussabschnitt einen identischen maximalen Außendurchmesser auf.
b. Im Bereich der Einbuchtung ist der Außendurchmesser des Gehäusebechers um das 4-bis 20-fache der Wandstärke des Gehäusebechers in diesem Bereich reduziert.

Es ist bevorzugt, dass die unmittelbar vorstehenden Merkmale a. und b. in Kombination realisiert sind.

Wie oben bereits ausgeführt, ist der erste Längsrand des ersten bandförmigen Stromkollektors, insebsondere des Anodenstromkollektors, an den Boden des Gehäusebechers oder an ein unmittelbar auf dem Boden aufsitzendes Metallblech geschweißt. Erfindungsgemäß kann sich die erfindungsgemäße Zelle in einer bevorzugten Ausführungsform durch das unmittelbar folgende Merkmal a. auszeichnen:
a. Der erste Längsrand des aus der zweiten endständigen Stirnseite austretenden ersten Stromkollektors sitzt unmittelbar auf dem Boden des Gehäusebechers auf und ist mit diesem durch Verschweißung verbunden.

Gemäß einer alternativen bevorzugten Ausführungsform zeichnet sich die erfindungsgemäße Zelle durch das unmittelbar folgende Merkmal b. aus:
b. Die Zelle umfasst ein Metallblech, das mit dem ersten Längsrand des aus der zweiten endständigen Stirnseite austretenden ersten Stromkollektors durch Verschweißung verbunden ist und über das dieser Stromkollektor elektrisch mit dem Boden des Gehäusebechers verbunden ist.

In beiden Fällen kann der Längsrand des aus der zweiten endständigen Stirnseite austretenden ersten Stromkollektors im Idealfall über seine gesamte Länge elektrisch und/oder thermisch angebunden werden.

In einer möglichen Weiterbildung der Erfindung zeichnet sich das mit dem ersten Stromkollektor, insbesondere dem Anodenstromkollektor, elektrisch verbundene Metallblech durch mindestens eines der unmittelbar folgenden Merkmale a. oder b. aus:
a. Das Metallblech besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Metallblech besteht aus dem gleichen Material wie der erste Stromkollektor, insbesondere der Anodenstromkollektor.

Es ist bevorzugt, dass die unmittelbar vorstehenden Merkmale a. und b. in Kombination realisiert sind.

Hinsichtlich der stofflichen Beschaffenheit des an den Kathodenstromkollektor angeschweißten metallischen Ableiterstreifens zeichnet sich die erfindungsgemäße Zelle bevorzugt durch mindestens eines der unmittelbar folgenden Merkmale a. und b. aus:
a. Der Ableiterstreifen besteht aus Aluminium oder einer Aluminiumlegierung.
b. Der Ableiterstreifen besteht aus dem gleichen Material wie der zweite Stromkollektor, insbesondere der Kathodenstromkollektor.

Es ist bevorzugt, dass die unmittelbar vorstehenden Merkmale a. und b. in Kombination realisiert sind.

Die möglichst großflächige Abdeckung der zweiten Stirnseite ist für das thermische Management der erfindungsgemäßen Energiespeicherzelle von Bedeutung. Je größer die Abdeckung ist, desto eher ist es möglich, den ersten Längsrand des ersten Stromkollektors, insbesondere des Anodenstromkollektors, möglichst über seine gesamte Länge zu kontaktieren. In Elektroden-Separator-Verbund gebildete Wärme kann so gut über das mit dem ersten Stromkollektor elektrisch verbundene Metallblech abgeführt werden.

Der Anodenstromkollektor, der Kathodenstromkollektor und der Separator oder die Separatoren der erfindungsgemäßen Zelle weisen bevorzugt die folgenden Dimensionen auf:
- Eine Länge im Bereich von 0,5 m bis 25 m
- Eine Breite im Bereich 40 mm bis 145 mm

Es ist bevorzugt, dass zur Herstellung des Elektroden-Separator-Verbunds die bandförmigen Elektroden gemeinsam mit dem oder den bandförmigen Separatoren einer Wickelvorrichtung zugeführt und in dieser bevorzugt um eine Wickelachse herum spiralförmig aufgewickelt werden. In einigen Ausführungsformen werden die Elektroden und der oder die Separatoren hierzu auf einen zylindrischen oder hohlzylindrischen Wickelkern aufgewickelt, der auf einem Wickeldorn sitzt und nach dem Wickeln im Wickel verbleibt.

Die Stromkollektoren der erfindungsgemäßen Energiespeicherzelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle einer als Lithium-Ionen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle einer als Lithium-Ionen-Zelle ausgebildeten erfindungsgemäßen Energiespeicherzelle insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AISi, AlCuTi, AlMgSi, AlSiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- Fig. 1 eine erste Ausführungsform einer erfindungsgemäßen Energiespeicherzelle (Querschnittsdarstellung), und
- Fig. 2 einen Elektroden-Separator-Verbund, der Bestandteil eines erfindungsgemäßen Energiespeicherzelle ist, sowie dessen Komponenten (Draufsicht bzw. perspektivische Darstellung).

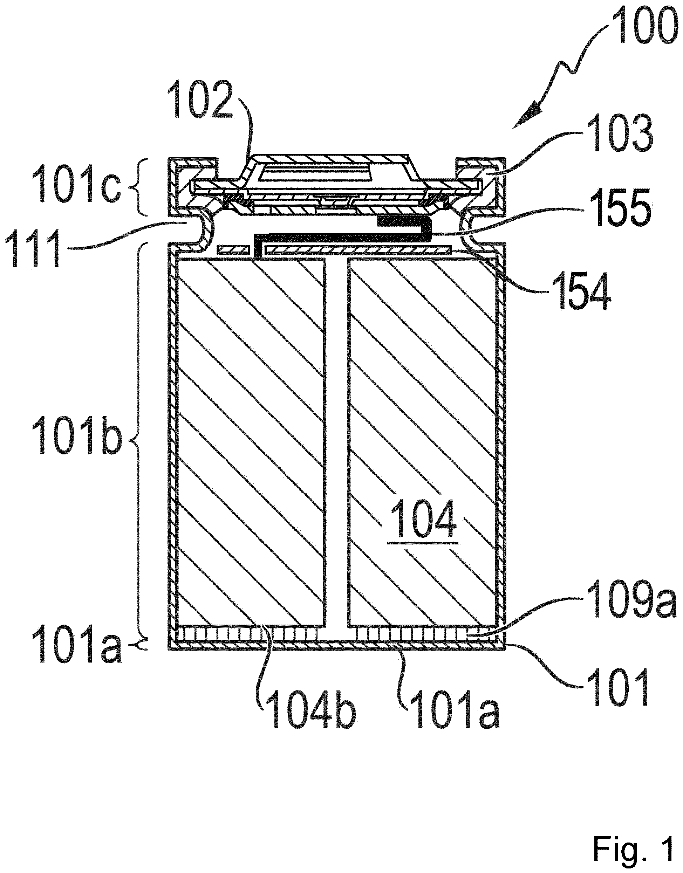

**Fig. 1** zeigt eine erfindungsgemäße Energiespeicherzelle 100 mit einem luft- und flüssigkeitsdicht verschlossenen Gehäuse, das einen metallischen Gehäusebecher 101 mit einer endständigen kreisförmigen Öffnung und ein Deckelbauteil 102 mit einem kreisförmigen Rand 102a, welche die kreisförmige Öffnung verschließt, umfasst. Die Zelle umfasst weiterhin eine ringförmige Dichtung 103 aus einem elektrisch isolierenden Material, die den kreisförmigen Rand 102a des Deckelbauteils 102 umschließt und den Gehäusebecher 101 und das Deckelbauteil 102 elektrisch voneinander isoliert. Der Gehäusebecher 101 umfasst in axialer Abfolge einen Boden 101a, einen Zentralabschnitt 101b und einen Verschlussabschnitt 101c, wobei der Zentralabschnitt 101b zylindrisch ausgebildet ist und in dem Zentralabschnitt 101b der Wickelmantel 104c des als Wickel ausgebildeten Elektroden-Separator-Verbunds 104 mit der Innenseite 101d des Gehäusebechers 101 in Kontakt steht, und in dem Verschlussabschnitt 101c die ringförmige Dichtung 103 in einem Presskontakt mit dem Deckelbauteil 102 und der Innenseite des Gehäusebechers 101 steht. Der Zentralabschnitt 101b und der Verschlussabschnitt 101c sind durch eine Einbuchtung 111, welche die Außenseite 101e des Gehäusebechers 101 ringförmig umläuft, getrennt.

Die Zelle 100 umfasst auch einen Elektroden-Separator-Verbund 104 in Form eines zylindrischen Wickels mit der Sequenz Anode / Separator/ Kathode, der allerdings hier nicht detailliert dargestellt ist. Zu erkennen ist lediglich der Längsrand 106a des Anodenstromkollektors 106, der aus der Stirnseite 104b des Elektroden-Separator-Verbunds 104 austritt. Der Längsrand 106a ist, bevorzugt über seine gesamte Länge, unmittelbar mit dem Gehäuseboden 101a verschweißt. Aus der ersten endständigen Stirnseite 104a tritt dagegen der an den Kathodenstromkollektor 109 angeschweißte metallische Ableiterstreifen 155 aus dem Elektroden-Separator-Verbund (104) aus. Dieser ist um einen Winkel von näherungsweise 90° umgebogen, so dass er zumindest abschnittweise im Wesentlichen flach auf der ersten Stirnseite aufliegen kann. Der besseren Übersicht wegen ist er hier beabstandet von der Stirnseite dargestellt, einschließlich einer zwischen dem umgebogenen Ableiterstreifen 155 und der Stirnseite 104a angeordneten Kunststoffscheibe 154, die die Stirnseite 104a vor einem unmittelbaren Kontakt mit dem Ableiterstreifen 155 schützt. In realen Zellen können der Ableiterstreifen 155, die Kunststoffscheibe 154 und die Stirnseite 104a unmittelbar aneinander liegen.

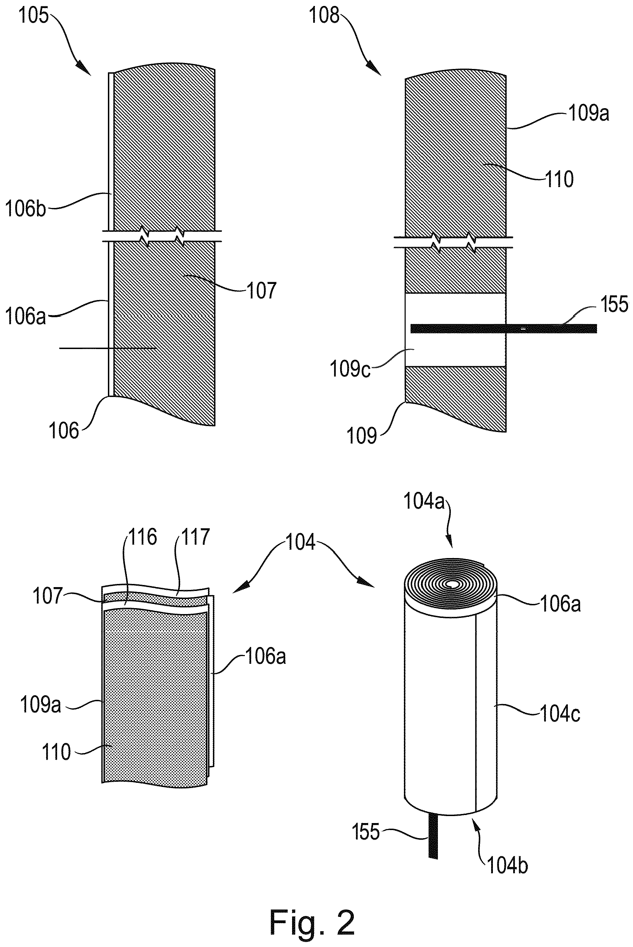

Der Aufbau des Elektroden-Separator-Verbunds 104 wird anhand von **Fig. 2** veranschaulicht.

Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich bevorzugt um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich bevorzugt um eine Aluminiumfolie. Er ist mit einer Schicht aus positivem Elektrodenmaterial 110 beladen. Weiterhin weist einen freien Abschnitt 109c auf, der nicht mit dem Elektrodenmaterial 110 beladen ist und an den ein metallischer Ableiterstreifen 155 angeschweißt ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der endständigen Stirnseite 104b austritt. Die versetzte Anordnung geht aus der Darstellung links unten hervor. Dort sind auch die zwei bandförmigen Separatoren 116 und 117 dargestellt, die im Wickel die Elektroden 105 und 108 voneinander trennen.

In der Darstellung rechts unten ist der Elektroden-Separator-Verbunds 104 in gewickelter Form dargestellt, wie er in einer Energiespeicherzelle gemäß Figur 1 zum Einsatz kommen kann. Der aus der Stirnseite 104b austretende Längsrand 106a des Anodenstromkollektors ist gut zu erkennen. Der Wickelmantel 104c wird durch eine Kunststofffolie gebildet.

## Patentansprüche

1. Energiespeicherzelle (100) mit den folgenden Merkmalen:
a. Die Zelle umfasst einen Elektroden-Separator-Verbund (104) mit der Sequenz erste Elektrode (105) / Separator (116) / zweite Elektrode (108),
b. die erste Elektrode (105) des Elektroden-Separator-Verbunds (104) ist bandförmig ausgebildet und umfasst einen ersten bandförmigen Stromkollektor (106), der einen ersten Längsrand (106a) und einen dazu parallelen zweiten Längsrand aufweist,
c. der erste bandförmige Stromkollektor (106) umfasst einen Hauptbereich, der mit einer Schicht (107) aus einem ersten Elektrodenmaterial beladen ist, sowie einen freien Randstreifen, der sich entlang seines ersten Längsrands (106a) erstreckt und der nicht mit dem ersten Elektrodenmaterial beladen ist,
d. die zweite Elektrode (108) des Elektroden-Separator-Verbunds (104) ist bandförmig ausgebildet und umfasst einen zweiten bandförmigen Stromkollektor (109), der einen ersten Längsrand (109a) und einen dazu parallelen zweiten Längsrand aufweist,
e. der zweite bandförmige Stromkollektor (109) ist mit einer Schicht aus einem zweiten Elektrodenmaterial (110) beladen und mindestens ein metallischer Ableiterstreifen (155) ist an dem zweiten Stromkollektor (109) fixiert,
f. der Elektroden-Separator-Verbund (104) liegt in Form eines zylindrischen Wickels mit einer ersten endständigen, von einer umlaufenden Kante begrenzten Stirnseite (104a) und einer zweiten endständigen, von einer umlaufenden Kante begrenzten Stirnseite (104b) und einem dazwischen liegenden Wickelmantel (104c) vor und umfasst die erste Elektrode (105) und die zweite Elektrode (108) in spiralförmig aufgewickelter Form,
g. die erste Elektrode (105) und die zweite Elektrode (108) sind innerhalb des Elektroden-Separator-Verbunds (104) derart angeordnet, dass der erste Längsrand (106a) des ersten Stromkollektors (106) aus der zweiten endständigen Stirnseite (104b) austritt,
h. der an den zweiten bandförmigen Stromkollektor (109) fixierte mindestens eine metallische Ableiterstreifen (155) tritt aus der ersten endständigen Stirnseite (104a) des Elektroden-Separator-Verbunds (104) aus,
i. die Zelle umfasst ein luft- und flüssigkeitsdicht verschlossenes Gehäuse, das einen metallischen Gehäusebecher (101) mit einem Boden (101a) und einer endständigen kreisförmigen Öffnung sowie ein Deckelbauteil (102) mit einem kreisförmigen Rand (102a), welches die endständige kreisförmige Öffnung verschließt, aufweist,
j. in dem Gehäusebecher ist der Elektroden-Separator-Verbund (104) in axialer Ausrichtung angeordnet, wobei es bevorzugt ist, dass die erste Stirnseite (104a) in Richtung des Deckelbauteils weist,
sowie
k. der an den zweiten Stromkollektor (109) fixierte mindestens eine metallische Ableiterstreifen (155) ist durch Verschweißung mit dem Deckelbauteil (102) oder einem durch das Deckelbauteil (102) geführten Pol verbunden, während der erste Längsrand (106a) des ersten Stromkollektors (106) an den Boden (101a) oder an ein unmittelbar auf dem Boden (101a) aufsitzendes Metallblech geschweißt ist,
oder
l. der an den zweiten Stromkollektor (109) fixierte mindestens eine metallische Ableiterstreifen (155) ist an den Gehäusebecher geschweißt, während der erste Längsrand (106a) des ersten Stromkollektors (106) durch Verschweißung mit dem Deckelbauteil (102) oder einem durch das Deckelbauteil (102) geführten Pol oder einem auf dem ersten Längsrand (106a) aufsitzenden Metallblech, das elektrisch an das Deckelbauteil (102) oder den Pol gekoppelt ist, verbunden ist.

2. Energiespeicherzelle nach Anspruch 1 mit mindestens einem der folgenden zusätzlichen Merkmale:
a. Die Zelle umfasst eine ringförmige Dichtung (103) aus einem elektrisch isolierenden Material, die den kreisförmigen Rand (102a) des Deckelbauteils (102) umschließt und den Gehäusebecher (101) und das Deckelbauteil (102) elektrisch voneinander isoliert.
b. Der Gehäusebecher (101) umfasst eine Innenseite (101d) und eine Außenseite (101e) und in axialer Abfolge den Boden (101a), einen Zentralabschnitt (101b) und einen Verschlussabschnitt (101c), wobei
- der Zentralabschnitt (101b) hohlzylindrisch ausgebildet ist und in dem Zentralabschnitt (101b) der Wickelmantel (104c) des als Wickel ausgebildeten Elektroden-Separator-Verbunds (104) mit der Innenseite (101d) des Gehäusebechers (101) in Kontakt steht, und
- in dem Verschlussabschnitt (101c) die ringförmige Dichtung (103) in einem Presskontakt mit dem Deckelbauteil (102) und der Innenseite des Gehäusebechers (101) steht.
c. Der Zentralabschnitt (101b) und der Verschlussabschnitt (101c) sind durch eine Einbuchtung (111), welche die Außenseite (101e) des Gehäusebechers (101) ringförmig umläuft, getrennt.

3. Energiespeicherzelle nach Anspruch 1 oder nach Anspruch 2 mit mindestens einem der folgenden zusätzlichen Merkmale:
a. Die Zelle umfasst einen Elektroden-Separator-Verbund (104) mit der Sequenz Anode (105) / Separator (116) / Kathode (108).
b. Die Anode (105) des Elektroden-Separator-Verbunds (104) ist bandförmig ausgebildet und umfasst einen bandförmigen Anodenstromkollektor (106), der einen ersten Längsrand (106a) und einen dazu parallelen zweiten Längsrand aufweist.
c. Der bandförmige Anodenstromkollektor (106) umfasst einen Hauptbereich, der mit einer Schicht (107) aus negativem Elektrodenmaterial beladen ist, sowie einen freien Randstreifen, der sich entlang seines ersten Längsrands (106a) erstreckt und der nicht mit dem negativen Elektrodenmaterial beladen ist.
d. Die Kathode (108) des Elektroden-Separator-Verbunds (104) ist bandförmig ausgebildet und umfasst einen bandförmigen Kathodenstromkollektor (109), der einen ersten Längsrand (109a) und einen dazu parallelen zweiten Längsrand aufweist.
e. Der bandförmige Kathodenstromkollektor (109) ist mit einer Schicht aus positivem Elektrodenmaterial (110) beladen und mindestens ein metallischer Ableiterstreifen (155) ist an dem Kathodenstromkollektor (109) fixiert.
f. Der Elektroden-Separator-Verbund (104) liegt in Form eines zylindrischen Wickels mit einer ersten endständigen, von einer umlaufenden Kante begrenzten Stirnseite (104a) und einer zweiten endständigen, von einer umlaufenden Kante begrenzten Stirnseite (104b) und einem dazwischen liegenden Wickelmantel (104c) vor und umfasst die Anode (105) und die Kathode (108) in spiralförmig aufgewickelter Form.
g. Die Anode (105) und die Kathode (108) sind innerhalb des Elektroden-Separator-Verbunds (104) derart angeordnet, dass der erste Längsrand (106a) des Anodenstromkollektors (106) aus der zweiten endständigen Stirnseite (104b) austritt.
h. Der an den Kathodenstromkollektor (109) angeschweißte metallische Ableiterstreifen (155) tritt aus der ersten endständigen Stirnseite (104a) des Elektroden-Separator-Verbunds (104) aus.
i. Die Zelle umfasst ein luft- und flüssigkeitsdicht verschlossenes Gehäuse, das einen metallischen Gehäusebecher (101) mit einem Boden (101a) und einer endständigen kreisförmigen Öffnung sowie ein Deckelbauteil (102) mit einem kreisförmigen Rand (102a), welche die endständige kreisförmige Öffnung verschließt, aufweist.
j. In dem Gehäusebecher ist der Elektroden-Separator-Verbund (104) in axialer Ausrichtung angeordnet, wobei die erste Stirnseite (104a) in Richtung des Deckelbauteils weist.
k. Die Zelle umfasst eine ringförmige Dichtung (103) aus einem elektrisch isolierenden Material, die den kreisförmigen Rand (102a) des Deckelbauteils (102) umschließt und den Gehäusebecher (101) und das Deckelbauteil (102) elektrisch voneinander isoliert.
l. Der Gehäusebecher (101) umfasst eine Innenseite (101d) und eine Außenseite (101e) und in axialer Abfolge den Boden (101a), einen Zentralabschnitt (101b) und einen Verschlussabschnitt (101c), wobei
- der Zentralabschnitt (101b) hohlzylindrisch ausgebildet ist und in dem Zentralabschnitt (101b) der Wickelmantel (104c) des als Wickel ausgebildeten Elektroden-Separator-Verbunds (104) mit der Innenseite (101d) des Gehäusebechers (101) in Kontakt steht, und
- in dem Verschlussabschnitt (101c) die ringförmige Dichtung (103) in einem Presskontakt mit dem Deckelbauteil (102) und der Innenseite des Gehäusebechers (101) steht.
m. Der Zentralabschnitt (101b) und der Verschlussabschnitt (101c) sind durch eine Einbuchtung (111), welche die Außenseite (101e) des Gehäusebechers (101) ringförmig umläuft, getrennt.
n. Der an den Kathodenstromkollektor (109) fixierte metallische Ableiterstreifen (155) ist durch Verschweißung mit dem Deckelbauteil (102) verbunden, während der erste Längsrand (106a) des Anodenstromkollektors (106) an den Boden (101a) und/oder an ein unmittelbar auf dem Boden aufsitzendes Metallblech geschweißt ist.

4. Energiespeicherzelle nach einem der vorhergehenden Ansprüche mit mindestens einem der folgenden zusätzlichen Merkmale:
a. Der an den zweiten bandförmigen Stromkollektor (109) fixierte, bevorzugt angeschweißte metallische Ableiterstreifen (155) tritt aus der ersten Stirnseite (104a) aus und ist um einen Winkel von näherungsweise 90° umgebogen, so dass er zumindest abschnittweise im Wesentlichen flach auf der ersten Stirnseite (104a) aufliegt.
b. Zwischen dem umgebogenen Ableiterstreifen (155) und der Stirnseite ist eine Kunststofffolie oder eine Kunststoffscheibe (154) angeordnet, die die Stirnseite (104a) vor einem unmittelbaren Kontakt mit dem Ableiterstreifen (155) schützt.

5. Energiespeicherzelle nach Anspruch 1 oder nach Anspruch 2 mit mindestens einem der folgenden zusätzlichen Merkmale:
a. Die Stirnseite (104a) wird von einem Längsrand des Separators (116) sowie gegebenenfalls einem weiteren Längsrand eines weiteren Separators gebildet.
b. Der Längsrand des Separators (116), der die Stirnseite (104a) bildet, ist keramisch verstärkt.
